# EUROPÄISCHE PATENTSCHRIFT

(11) **EP 0 268 285 B1**
(45) Veröffentlichungstag und Bekanntmachung des Hinweises auf die Patenterteilung: **25.05.1994**
(21) Anmeldenummer: 87117034.6
(22) Anmeldetag: 19.11.1987
(51) Int. Cl.: G06F 15/16, G06F 9/44

(54) **Verfahren und Schaltungsanordnung zum Urladen eines Zweitrechners**
Method and circuit arrangement for the initial loading of a secondary computer
Méthode et circuit pour le chargement initial d'un calculateur secondaire

(30) Priorität: 20.11.1986 DE 3639571
(43) Veröffentlichungstag der Anmeldung: 25.05.1988
(73) Patentinhaber: Alcatel SEL Aktiengesellschaft, D-70435 Stuttgart (DE); ALCATEL N.V., NL-1077 XX Amsterdam (NL)
(72) Erfinder: Kopp, Dieter, D-7152 Hemmingen (DE); Hörmann, Thomas, D-7141 Grossbottwar (DE); Ackermann, Uwe, D-7149 Freiberg a.N. (DE)
(74) Vertreter: Gähr, Hans-Dieter, Dipl.-Ing. (FH)

(56) Entgegenhaltungen:
- US-A- 4 117 974
- US-A- 4 562 535
- PATENT ABSTRACTS OF JAPAN vol. 7, no. 96 (P-193)(1241) 22 April 1983, & JP-A-58 22464
- PATENT ABSTRACTS OF JAPAN vol. 8, no. 248 (P-313)(1685) 14 November 1984, & JP-A-59 121520

## Beschreibung

Die Erfindung betrifft ein Verfahren zum Urladen eines Zweitrechners, der über einen gemeinsamen Speicher mit wahlfreiem Zugriff mit einem Hauptrechner in Verbindung steht, und eine Schaltungsanordnung zum Durchführen des Verfahrens.

Ein solcher Hauptrechner enthält einen Massenspeicher, in dem Programme für den Zweitrechner abgespeichert sind. Diese Programme werden im Bedarfsfall zunächst in den gemeinsamen Speicher, z.B. in einen Zweitor-Speicher (dual-port memory) geladen und dann durch den Zweitrechner in seinen Programmspeicher zur weiteren Bearbeitung übernommen.

Zum Übernehmen dieser Programme muß der Zweitrechner zuerst urgeladen werden. Dazu enthält der Zweitrechner üblicherweise einen Startroutinespeicher (Bootstrap-ROM), in dem ein Urladeprogramm fest eingeschrieben ist. Solche Startroutinespeicher sind jedoch teuer, unflexibel (da Festwertspeicher) und verbrauchen zusätzlichen Platz.

Die technische Aufgabe des Verfahrens und der Schaltungsanordnung nachder Erfindung besteht darin, einen Zweitrechner urzuladen, ohne daß ein Startroutinespeicher benötigt wird.

Diese Aufgabe wird verfahrensmäßig durch die technische Lehre des ersten Patentanspruchs gelöst. Eine Schaltungsanordnung zur Durchführung des Verfahrens nach Anspruch 1 wird durch die technische Lehre des Patentanspruchs 3 angegeben. Weitere besondere Ausgestaltungen des Verfahrens und der Schaltungsanordnung sind dem Unteranspruch 2 bzw. dem Unteranspruch 4 zu entnehmen.

Ein Vorteil der Erfindung liegt insbesondere darin, daß die aufwendigen Startroutinespeicher eingespart werden, da das Urladeprogramm einfach im Massenspeicher des Hauptrechners abgelegt wird. Daraus ergibt sich die Möglichkeit, das Urladeprogramm, das nicht mehr in einem Festwertspeicher steht, jederzeit ändern zu können.

Ein Ausführungsbeispiel wird im folgenden anhand der Zeichnungen ausführlich erläutert. Es zeigen:
- Figur 1: ein Blockschaltbild der erfindungsgemäßen Schaltungsanordnung und
- Figur 2: ein Schaltbild einer Speicherzugriffslogik der erfindungsgemäßen Schaltungsanordnung nach Figur 1.

Zur besseren Erläuterung des erfindungsgemäßen Verfahrens wird zunächst die dazugehörige Schaltungsanordnung beschrieben.

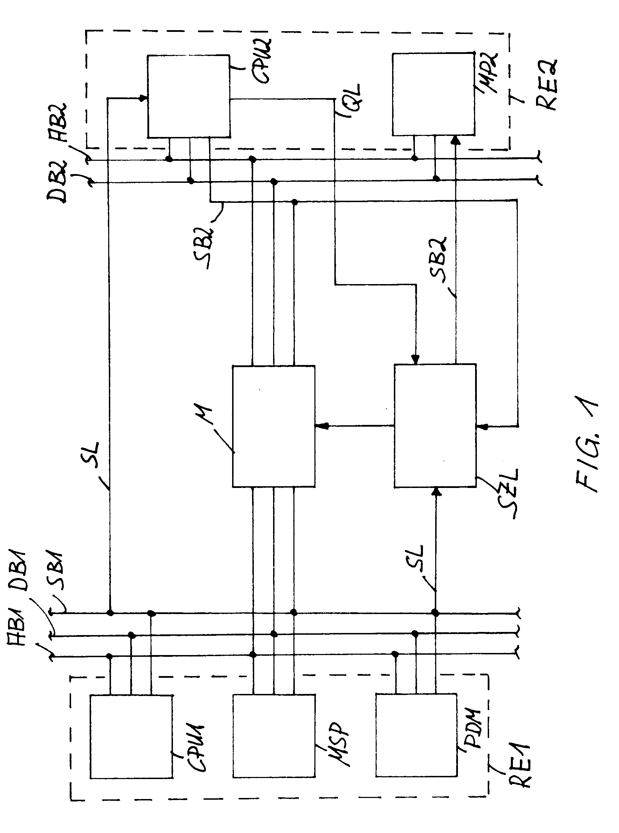

Ein Hauptrechner RE1, wie in Figur 1 dargestellt, weist eine Zentraleinheit CPU1, einen Massenspeicher MSP und einen Programm- und Datenspeicher PDM auf, die über einen Adressenbus AB1, einen Datenbus DB1 und einen Steuerbus SB1 untereinander und mit einem gemeinsamen Speicher M verbunden sind. Der gemeinsame Speicher M kann ein Zweitor-Speicher (dual-port memory) sein.

Ein Zweitrechner RE2 weist im wesentlichen eine Zentraleinheit CPU2 und einen Programmspeicher MP2 auf, die über einen weiteren Datenbus DB2, einen weiteren Adressenbus AB2 und einen weiteren Steuerbus SB2 ebenfalls untereinander und mit dem gemeinsamen Speicher M verbunden sind.

Der Hauptrechner RE1 ist über eine Steuerleitung SL, hier der Steuerbus SB1 des Hauptrechners RE1, mit der Zentraleinheit CPU2 des Zweitrechners RE2 (z.B. mit einem Reset-Eingang) und mit einer Speicherzugriffslogik SZL verbunden. Die Speicherzugriffslogik SZL (wird noch näher erläutert) ist an den gemeinsamen Speicher M angeschlossen und in den Steuerbus SB2 des Zweitspeichers RE2 zwischen die Zentraleinheit CPU2 und den Programmspeicher MP2 eingeschleift.

Ferner ist die Zentraleinheit CPU2 des Zweitrechners RE2 über eine Quittungsleitung QL mit der Speicherzugriffslogik SZL verbunden.

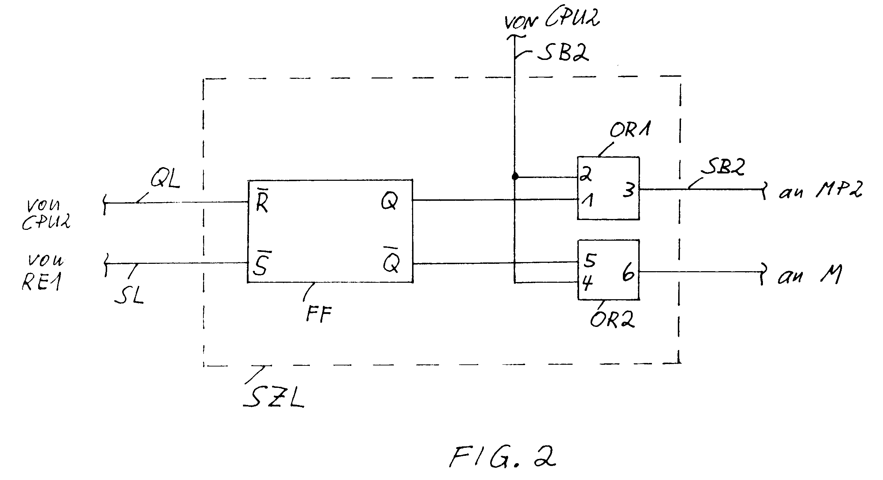

Ausgehend von einen "active low" Schaltungstechnik, ist die Speicherzugriffslogik SZL, wie aus Figur 2 zu entnehmen ist, aus einem bistabilen Kippglied FF, hier ein RS-Flipflop, einem ersten ODER-Glied OR1 und einem zweiten ODER-Glied OR2, wobei beide ODER-Glieder mit "active High" logik ansprechen, aufgebaut. Dabei ist der Steuerbus SB1 des Hauptrechners RE1 mit einem ersten Eingang S̅ und die Zentraleinheit CPU2 des Zweitrechners RE2 über die Quittungsleitung QL mit einem zweiten Eingang R̅ des bistabilen Kippgliedes FF verbunden. Ein nichtinvertierender Ausgang Q und ein invertierender Ausgang Q̅ des bistabilen Kippgliedes FF sind an einen ersten Eingang 1 des ersten ODER-Gliedes OR1 bzw. an einen ersten Eingang 5 des zweiten ODER-Gliedes OR2 angeschlossen. Weiterhin ist die Zentraleinheit CPU2 des Zweitrechners RE2 über den Steuerbus SB2 mit einem zweiten Eingang 2 des ersten ODER-Gliedes OR1 und einem zweiten Eingang 4 des zweiten ODER-Gliedes OR2 verbunden. Ein Ausgang 3 des ersten ODER-Gliedes OR1 ist über den Steuerbus SB2 des Zweitrechners RE2 mit dessen Programmspeicher MP2 verbunden. Schließlich ist ein Ausgang 6 des zweiten ODER-Gliedes OR2 an den gemeinsamen Speicher M angeschlossen.

In dem Massenspeicher MSP des Hauptrechners RE1 ist ein Urladeprogramm zum Urladen des Zweitrechners RE2 abgespeichert. Die Zentraleinheit CPU1 des Hauptrechners RE1 lädt zuerst dieses Ladeprogramm in den gemeinsamen Speicher M. Dann steuert die Zentraleinheit CPU1 des Hauptrechners RE1 die Speicherzugriffslogik SZL über die Steuerleitung SL derart an, daß, nachdem der Hauptrechner RE1 über die Steuerleitung SL einen Wiederanlaufbefehl (restart) an den Reset-Eingang der Zentraleinheit CPU2 des Zweitrechners RE2 angelegt hat, alle von der Zentraleinheit CPU2 kommenden Programmspeicherzugriffsbefehl, z.B. programm read, so lange auf den Teil des gemeinsamen Speichers M umgeleitet werden, in dem das Urladeprogramm abgespeichert ist, bis der Zweitrechner RE2 das Urladeprogramm ausgelesen hat.

Dieses Ansteuern der Speicherzugriffslogik SZL wird nun mit Hilfe von Figur 2 näher erläutert. Geht man von der "active low" Schaltungstechnik aus, so wird zunächst über die Steuerleitung SL an den ersten Eingang S̅ des bistabilen Kippgliedes FF ein L-Zustand und an den zweiten Eingang R̅ über die Quittungsleitung QL ein H-Zustand angelegt. Dadurch wird über den nichtinvertierenden Ausgang Q ein H-Zustand an den ersten Eingang 1 des ersten ODER-Gliedes OR1 und über den invertierenden Ausgang Q̅ an den ersten Eingang 5 des zweiten ODER-Gliedes OR2 ein L-Zustand angelegt. Ein von der Zentraleinheit CPU2 des Zweitrechners RE2 kommender Speicherzugriffsbefehl, d.h. ein L-Zustand an den zweiten Eingängen 2, 4 der beiden ODER-Glieder OR1, OR2, bewirkt einen H-Zustand auf dem Steuerbus SB2 zum Programmspeicher MP2 des Zweitrechners RE2 und ein L-Zustand am Ausgang 6 des zweiten ODER-Gliedes OR2. Aufgrund des "active-low" Prinzips wird also der mit dem Ausgang 6 verbundene gemeinsame Speicher M angesteuert und zwar solange bis das Urladeprogramm in den Zweitrechner RE2 geladen ist.

Danach wird über die Quittungsleitung QL durch die Zentraleinheit CPU2 des Zweitrechners RE2 ein Quittungssignal gesendet (L-Zustand am zweiten Eingang R̅ des bistabilen Kippgliedes FF), so daß, da keine Ansteuerung des Hauptrechners RE1, (H-Zustand am ersten Eingang S̅ des bistabilen Kippgliedes FF) jetzt alle Programmspeicherzugriffsbefehle des Zweitrechners RE2 durch die Speicherzugriffslogik SZL zum Programmspeicher MP2 umgeleitet werden. Somit kann die Zentraleinheit CPU2 des Zweitrechners RE2 auf ihren Programmspeicher MP2 zugreifen und mit dem Urladeprogramm andere Programme, die im Massenspeicher MSP abgelegt und über den gemeinsamen Speicher M zur Verfügung gestellt werden, jeweils übernehmen und abarbeiten.

Mit dem erfindungsgemäßen Verfahren ist es somit möglich die teueren und platzverbrauchenden Startroutinespeicher einzusparen.

Da das Urladeprogramm in einem Massenspeicher MSP und nicht in einem Festwertspeicher abgelegt ist, ist in vorteilhafter Weise ein veränderbares Urladeprogramm abspeicherbar.

Der zusätzliche Aufwand für die Speicherzugriffslogik SZL ist in Anbetracht dessen, daß im allgemeinen in einer solchen Schaltungsanordnung noch einige logische Gatter frei sind, äußerst gering.

## Patentansprüche

1. Verfahren zum Urladen eines Zweitrechners (RE2), der über einen gemeinsamen Speicher (M) mit wahlfreiem Zugriff mit einem Hauptrechner (RE1) in Verbindung steht,
**dadurch gekennzeichnet,** daß
ein Urladeprogramm, das in einem Massenspeicher (MSP) des Hauptrechners (RE1) abgespeichert ist, durch den Hauptrechner (RE1) in den gemeinsamen Speicher (M) geladen wird, daß der Hauptrechner (RE1) eine mit dem gemeinsamen Speicher (M) und dem Zweitrechner (RE2) verbundene Speicherzugriffslogik (SZL) derart ansteuert, daß, nachdem der Hauptrechner (RE1) einen Wiederanlaufbefehl an eine Zentraleinheit (CPU2) des Zweitrechners (RE2) angelegt hat, alle von der Zentraleinheit (CPU2) kommenden Programmspeicherzugriffsbefehle durch die Speicherzugriffslogik (SZL) so lange auf den Teil des gemeinsamen Speichers (M) umgeleitet werden, in dem das Urladeprogramm abgespeichert ist, bis der Zweitrechner (RE2) das Urladeprogramm aus dem gemeinsamen Speicher (M) ausgelesen hat, und daß dann die Speicherzugriffslogik (SZL) durch die Zentraleinheit (CPU2) mittels eines Quittungssignales derart angesteuert wird, daß alle weiteren Programmspeicherzugriffsbefehle der Zentraleinheit (CPU2) an einen Programmspeicher (MP2) des Zweitrechners (RE2) geleitet werden.

2. Verfahren nach Anspruch 1, dadurch gekennzeichnet, daß in dem Massenspeicher (MSP) des Hauptrechners (RE1) ein veränderbares Urladeprogramm abgespeichert ist.

3. Schaltungsanordnung zum Urladen eines einen Programmspeicher enthaltenden Zweitrechners (RE2), der über einen gemeinsamen Speicher (M) mit wahlfreiem Zugriff mit einem Hauptrechner (RE1) verbunden ist, zur Durchführung des Verfahrens nach Anspruch 1,
dadurch gekennzeichnet, daß der Hauptrechner (RE1) über eine Steuerleitung (SL) mit der Zentraleinheit (CPU2) des Zweitrechners (RE2) zum Anlegen eines Wiederanlaufbefehls und mit einer Speicherzugriffslogik (SZL) verbunden ist, die zur Umleitung der vom Zweitrechner (RE2) ausgegebenen Befehle entweder zum gemeinsamen Speicher (M) oder zum Programmspeicher (MP2) des Zweitrechners (RE2) vorgesehen ist, daß die an den gemeinsamen Speicher (M) angeschlossene Speicherzugriffslogik (SZL) zur Übertragung von Speicherzugriffsbefehlen mit einem die Zentraleinheit (CPU2) und den Programmspeicher (MP2) des Zweitrechners (RE2) verbindenden Steuerbus (SB2) eingeschleift ist, und daß die Speicherzugriffslogik über eine Quittungsleitung (QL) mit der Zentraleinheit (CPU2) des Zweitrechners (RE2) verbunden ist.

4. Schaltungsanordnung nach Anspruch 3, dadurch gekennzeichnet, daß diespeicherzugriffslogik (SZL) aus einem bistabilen Kippglied (FF), einem ersten ODER-Glied (OR1) und einem zweiten ODER-Glied (OR2), die aufgrund ihrer zur übrigen Schaltung inversen logik ab AND-Glieder ansprechen, aufgebaut ist, daß der Hauptrechner (RE1) über die Steuerleitung (SL) mit einem ersten Eingang (S̅) und die Zentraleinheit (CPU2) des Zweitrechners (RE2) über die Quittungsleitung (QL) mit einem zweiten Eingang (R̅) des bistabilen Kippgliedes (FF) verbunden sind, daß ein nichtinvertierender Ausgang (Q) und ein invertierenden Ausgang (Q̅) des bistabilen Kippgliedes (FF) mit einem ersten Eingang (1) des ersten ODER-Gliedes (OR1) bzw. mit einem ersten Eingang (5) des zweiten ODER-Gliedes (OR2) verbunden sind, daß die Zentraleinheit (CFU2) über den Steuerbus (SB2) mit einem zweiten Eingang (2) des ersten ODER-Gliedes (OR1) und mit einem zweiten Eingang (4) des zweiten ODER-Gliedes (OR2) verbunden ist, daß ein Ausgang (3) des ersten ODER-Gliedes (OR1) über den Steuerbus (SB2) mit dem Programmspeicher (MP2) des Zweitrechners verbunden ist und daß ein Ausgang (6) des zweiten ODER-Gliedes (OR2) an den gemeinsamen Speicher (M) angeschlossen ist.

## Claims

1. A method of loading an initial program loader into a secondary computer (RE2) connected via a shared random-access memory (M) to a main computer (RE1),
**characterized in** that the initial program loader, which is stored in a mass memory (MSP) of the main computer (RE1), is loaded by the main computer (RE1) into the shared memory (M), that a memory access logic (SZL) connected to the shared memory (M) and the secondary computer (RE2) is controlled by the main computer (RE1) in such a way that, after the main computer (RE1) has sent a restart instruction to a central processing unit (CPU2) of the secondary computer (RE2), all program memory access instructions coming from the central processing unit (CPU2) are routed by the memory access logic (SZL) to the portion of the shared memory (M) containing the initial program loader until the secondary computer (RE2) has read the initial program loader out of the shared memory (M), and that the central processing unit (CPU) then sends to the memory access logic (SZL) an acknowledge signal which causes all further program memory access instructions from the central processing unit (CPU2) to be routed to a program memory (MP2) of the secondary computer (RE2).

2. A method as claimed in claim 1, characterized in that a variable initial program loader is stored in the mass memory (MPS) of the main computer (RE1).

3. A circuit arrangement for loading an initial program loader into a secondary computer (RE2) connected via a shared random-access memory (RE1) to a main computer (RE1), for carrying out the method claimed in claim 1, characterized in that the main computer (RE1) is connected via a control line (SL) to the central processing unit (CPU2) of the secondary computer (RE2) for sending a restart instruction and to a memory access logic (SZL), that the memory access logic (SZL) is connected into a control bus (SB2) linking the central processing unit (CPU2) and the program memory (MP2), and that the memory access logic (SZL) is connected via an acknowledgement line (QL) to the central processing unit (CPU2).

4. A circuit arrangement as claimed in claim 3,
characterized in that the memory access logic (SZL) consists of a flip-flop (FF), a first OR gate (OR1), and a second OR gate (OR2) which, since their logic is inverse to that of the remainder of the circuit, respond as AND gates, that the main computer (RE1) is connected via the control line (SL) to a first input (S̅) of the flip-flop (FF), that the central processing unit (CPU2) of the secondary computer (RE2) is connected via the acknowledgement line (QL) to a second input (R̅) of the flip-flop (FF), that a noninverting output (Q) and an inverting output (Q̅) of the flip-flop (FF) are respectively connected to a first input (1) of the first OR gate (OR1) and to a first input (5) of the second OR gate (OR2), that the central processing unit (CPU2) is connected via the control bus (SB2) to a second input (2) of the first OR gate (OR1) and to a second input (4) of the second OR gate (OR2), that an output (3) of the first OR gate (OR1) is connected via the control bus (SB2) to the program memory (MP2) of the secondary computer, and that an output (6) of the second OR gate (OR2) is connected to the shared memory (M).

## Revendications

1. Procédé d'amorçage d'un calculateur secondaire (RE2) qui, par l'intermédiaire d'une mémoire commune (M) à accès sélectif, est relié à un calculateur principal (RE1), procédé caractérisé par le fait qu'un programme d'amorçage, qui est mémorisé dans une mémoire de masse (MSP) du calculateur principal (RE1), est chargé dans la mémoire commune (M) par le calculateur principal (RE1), par le fait que le calculateur principal (RE1) active un circuit logique (SZL) d'accès en mémoire, relié avec la mémoire commune (M) et avec le calculateur secondaire (RE2), de façon telle que, après que le calculateur principal RE1) a envoyé une instruction de redémarrage à une unité centrale (CPU2) du calculateur secondaire (RE2), toutes les instructions d'accès en mémoire de programmes provenant de l'unité centrale (CPU2) sont détournées sur la partie de la mémoire commune (M) dans laquelle est mémorisée le programme d'amorçage jusqu'à ce que le calculateur secondaire (RE2) ait lu dans la mémoire commune (M) le programme d'amorçage, et par le fait qu'alors le circuit logique (SZL) d'accès en mémoire est, par l'unité centrale (CPU2) et au moyen d'un signal d'accusé de réception, activé de façon telle que toutes les autres instructions d'accès en mémoire de programmes de l'unité centrale (CPU2) sont dirigées sur une mémoire de programmes (MP2) du calculateur secondaire (RE2).

2. Procédé selon la revendication 1, caractérisé par le fait que dans la mémoire de masse (MSP) du calculateur principal (RE1) est mémorisé un programme d'amorçage modifiable.

3. Dispositif de circuit pour amorcer un calculateur secondaire (RE2) qui contient une mémoire de programmes et qui est relié, par l'intermédiaire d'une mémoire commune M à accès sélectif, avec un calculateur principal (RE1), pour la mise en oeuvre du procédé selon la revendication 1,
dispositif caractérisé par le fait que le calculateur principal (RE1) est relié, par l'intermédiaire d'une ligne d'instructions (SL), avec l'unité centrale (CPU2) du calculateur secondaire (RE2) pour y envoyer une instruction de redémarrage et avec un circuit logique (SZL) d'accès en mémoire qui est prévu pour détourner les instructions provenant du calculateur secondaire (RE2) soit en direction de la mémoire commune (M) soit en direction de la mémoire de programmes (MP2) du calculateur secondaire (RE2), par le fait que le circuit logique (SZL) d'accès en mémoire, relié à la mémoire commune (M), pour transférer les instructions d'accès en mémoire, est sur une boucle formée par le bus d'instructions (SB2) qui relie l'unité centrale (CPU2) avec la mémoire de programmes (MP2) du calculateur secondaire (RE2), et par le fait que le circuit logique d'accès en mémoire est relié, par l'intermédiaire d'une ligne d'accusé de réception (QL), avec l'unité centrale (CPU2) du calculateur secondaire (RE2).

4. Dispositif de circuit selon la revendication 3, caractérisé par le fait que le circuit logique (SZL) d'accès en mémoire est constitué d'un élément basculant bistable (FF), d'un premier élément OU (OR1) et d'un second élément OU (OR2) qui, du fait que leur circuit logique est inversé par rapport au circuit habituel, correspondent à des éléments ET, par le fait que le calculateur principal (RE1) est relié, par l'intermédiaire de la ligne d'instructions (SL), avec une première entrée (S̅) et que l'unité centrale (CPU2) du calculateur secondaire (RE2) est relié, par l'intermédiaire de la ligne d'accusé de réception (QL), avec une seconde entrée (R̅) de l'élément basculant bistable (FF), par le fait qu'une sortie de non-changement de signe (Q) et une sortie de changement de signe (Q̅) de l'élément basculant bistable (FF) sont reliées avec une première entrée (1) du premier élément OU (OR1) ou avec une première entrée (5) du second élément OU (OR2), par le fait que l'unité centrale (CPU2) est reliée, par l'intermédiaire du bus d'instructions (SB2), avec une seconde entrée (2) du premier élément OU (OR1) et avec une seconde entrée (4) du second élément OU (OR2), par le fait qu'une sortie (3) du premier élément OU (OR1) est reliée, par l'intermédiaire du bus d'instructions (SB2), avec la mémoire de programmes (MP2) du calculateur secondaire et par le fait qu'une sortie (6) du second élément OU (OR2) est reliée à la mémoire commune (M).
